# EUROPÄISCHE PATENTSCHRIFT

(11) **EP 2 455 310 B1**
(45) Veröffentlichungstag und Bekanntmachung des Hinweises auf die Patenterteilung: **21.08.2013**
(21) Anmeldenummer: 11189071.1
(22) Anmeldetag: 15.11.2011
(51) Int. Cl.: B65G 43/10, B65G 47/26

(54) **Staufördersystem mit zwei Kommunikationssystemen**
Accumulation conveyor system with two communication systems
Système à convoyeur accumulateur doté de deux systèmes de communication

(30) Priorität: 17.11.2010 DE 102010044027
(43) Veröffentlichungstag der Anmeldung: 23.05.2012
(73) Patentinhaber: Klug GmbH Integrierte Systeme, 92552 Teunz (DE)
(72) Erfinder: Klug, Johann, 92552 Teunz (DE); Prögel, Johannes, 92694 Etzenricht (DE)
(74) Vertreter: Bergmeier, Werner

(56) Entgegenhaltungen:
- WO-A1-2004/067416
- US-A- 5 285 887
- US-A- 6 035 999
- US-A1- 2004 003 982
- US-A1- 2005 192 704
- US-B1- 6 315 104

## Beschreibung

Die vorliegende Erfindung betrifft ein Staufördersystem, insbesondere ein Staurollenfördersystem, zum staudrucklosen Fördern von Fördergut längs wenigstens eines Förderwegs aus mehreren Förderabschnitten, wobei die Förderabschnitte jeweils eine Fördereinrichtung zum Fördern von Fördergut in einer Transportrichtung, eine steuerbare Antriebseinrichtung zum Antrieb der Fördereinrichtung, eine Sensoreinrichtung zur Erfassung von Fördergut auf dem jeweiligen Förderabschnitt und eine Förderabschnittssteuereinrichtung zum Steuern der Antriebseinrichtung und zum Verarbeiten von Signalen der Sensoreinrichtung umfassen, wobei dem Förderweg ein erstes Kommunikationssystem zugeordnet ist, bei dem eine besagte an einem Ende des Förderwegs angeordnete Förderabschnittssteuereinrichtungen eine Kommunikationsschnittstelle erster Art aufweist, welche mit einer Fördersystemsteuereinrichtung zur Steuerung des wenigstens einen Förderwegs zur Kommunikation verbunden ist, und bei dem die Förderabschnittssteuereinrichtungen jeweils über eine Kommunikationsschnittstelle zweiter Art und eine daran angeschlossene Punkt-zu-Punkt-Leitung mit den jeweils benachbarten Förderabschnittssteuereinrichtungen zur Kommunikation verbunden sind, wobei eine erste Betriebsart vorgesehen ist, bei welcher der Förderweg ausschließlich über das erste Kommunikationssystem gesteuert ist.

Staufördersysteme für Fördergut, insbesondere für Stückgut wie Pakete und andere Transportbehälter, sind aus dem Stand der Technik bekannt. Staudruckloses Fördern bedeutet dabei, dass ein Kontakt zwischen einzelnen Fördergütern vermieden ist.

Weiterhin offenbart die WO 2004/067416 A1 ein Staufördersystem, bei dem die Förderabschnittssteuerungen über einen Förderwegbus mit der Fördersystemsteuereinrichtung kommunizieren.

Aufgabe der vorliegenden Erfindung ist es, ein Staufördersystem der eingangs genannten Art zu verbessern.

Die Aufgabe wird bei einem Staufördersystem der eingangs genannten Art dadurch gelöst, dass dem Förderweg ein zweites Kommunikationssystem zugeordnet ist, bei dem die Förderabschnittssteuereinrichtungen jeweils eine Kommunikationsschnittstelle dritter Art aufweisen, welche als Knoten eines Förderwegbusses ausgebildet sind, wobei eine mit der Fördersystemsteuereinrichtung zur Kommunikation verbundene Verbindungsschnittstelle als Knoten des Förderwegbusses ausgebildet ist.

Das Staufördersystem weist wenigstens einen Förderweg auf, der aus einer Vielzahl von Förderabschnitten besteht, welche derart steuerbar sind, dass beim Fördern von Fördergut ein Auflaufen eines der Fördergüter auf ein anderes Fördergut verhindert ist. Das Staufördersystem kann aber auch mehrere Förderwege umfassen, welche beispielsweise durch Übergabeeinrichtungen wie Einmündungen oder Abzweigungen miteinander verbunden sein können.

Jeder der Förderabschnitte weist eine Fördereinrichtung auf, welche zum Tragen und Bewegen von Fördergut ausgebildet ist. Ebenso weist jeder der Förderabschnitte eine individuell steuerbare Antriebseinrichtung zum Antrieb seiner Fördereinrichtung auf. Auf diese Weise ist es möglich, eines der Fördergüter wahlweise auf dem jeweiligen Förderabschnitt anzuhalten oder in einer vorgesehenen Transportrichtung zu fördern. Weiterhin umfasst jeder der Förderabschnitte eine Sensoreinrichtung zur Erfassung von Fördergut auf dem jeweiligen Förderabschnitt. Hierdurch kann festgestellt werden, ob der jeweilige Förderabschnitt mit einem Fördergut belegt oder ob er unbelegt ist. Darüber hinaus weist jeder der Förderabschnitte eine Förderabschnittssteuereinrichtung auf, welche zum Steuern der Antriebseinrichtung des Förderabschnitts und zum Verarbeiten von Signalen der Sensoreinrichtung des Förderabschnitts ausgebildet ist. Hierzu ist die Förderabschnittssteuereinrichtung sowohl mit der Antriebseinrichtung als auch mit der Sensoreinrichtung, beispielsweise über förderabschnittsinterne Kommunikationsmittel, zum Informationsaustausch verbunden.

Dabei ist dem Förderweg ein erstes Kommunikationssystem zugeordnet, bei dem eine besagte an einem Ende, insbesondere am stromabwärtigen Ende, des Förderwegs angeordnete Förderabschnittssteuereinrichtung eine Kommunikationsschnittstelle erster Art aufweist, welche mit einer Fördersystemsteuereinrichtung zur Steuerung des wenigstens einen Förderwegs zur Kommunikation verbunden ist. Bei den mittleren Förderabschnittssteuereinrichtungen des Förderwegs ist eine Kommunikationsschnittstelle erster Art nicht erforderlich aber möglich. Bei der am anderen Ende des Förderwegs angeordneten Förderabschnittssteuereinrichtung ist eine Kommunikationsschnittstelle erster Art ebenfalls nicht zwingend erforderlich, aber insbesondere dann sinnvoll, wenn die Transportrichtung des Förderwegs umkehrbar sein soll.

Bei der Fördersystemsteuereinrichtung kann es sich insbesondere um eine programmierbare Steuerung zur Steuerung des Staufördersystem insgesamt handeln. Sie kann eine Bedienschnittstelle aufweisen, so dass das Staufördersystem insgesamt zentral durch eine Bedienperson bedienbar ist. Die Fördersystemsteuereinrichtung kann insbesondere dazu dienen, die Förderabläufe verschiedener Förderwege des Fördersystems aufeinander abzustimmen.

Weiterhin sind bei dem ersten Kommunikationssystem die Förderabschnittssteuereinrichtungen jeweils über eine Kommunikationsschnittstelle zweiter Art und eine daran angeschlossene Punkt-zu-Punkt-Leitung mit den jeweils benachbarten Förderabschnittssteuereinrichtungen zur Kommunikation verbunden. Das bedeutet, dass die mittleren Förderabschnittssteuereinrichtungen des Förderwegs in der Regel zwei Kommunikationsschnittstelle zweiter Art aufweisen, da sie auch zwei benachbarte Förderabschnittssteuereinrichtungen haben. Die beiden endseitigen Förderabschnittssteuereinrichtungen des Förderwegs hingegen benötigen jeweils nur eine Kommunikationsschnittstelle zweiter Art. Gleichwohl können auch hier zwei Kommunikationsschnittstelle zweiter Art vorgesehen sein. Unter einer Punkt-zu-Punkt-Leitung wird hierbei eine Kommunikationsleitung verstanden, an die genau zwei Kommunikationsteilnehmer angeschlossen sind.

Insgesamt können so sämtliche Förderabschnittssteuereinrichtungen baugleich ausgeführt sein, wobei nicht benötigte Kommunikationsschnittstellen unbeschaltet bleiben können.

Das erste Kommunikationssystem erlaubt eine einfache, schnelle und sichere Abstimmung der Arbeitsabläufe innerhalb des Förderwegs sowie eine Abstimmung der Arbeitsabläufe im Förderweg an externe Arbeitsabläufe.

Hierzu kann ein sogenanntes Daisy-Chain-Verfahren vorgesehen sein, bei dem Steuerbefehle in genau einer Richtung, nämlich entgegen der Transportrichtung, von der Fördersystemsteuereinrichtung zur stromabwärtigen Förderabschnittssteuereinrichtung, von dort bis zur stromaufwärts benachbarten Förderabschnittssteuereinrichtung und von dort weiter zur nächsten stromaufwärts benachbarten Förderabschnittssteuereinrichtung usw. übertragen werden.

Beispielsweise kann ein durch die Fördersystemsteuereinrichtung an die Kommunikationsschnittselle erster Art der endseitigen Förderabschnittssteuereinrichtung gegebener Einschaltbefehl über die Kommunikationsschnittstellen zweiter Art und die daran angeschlossenen Punkt-zu-Punkt-Leitung zu sämtlichen Förderabschnittssteuereinrichtungen des Förderwegs übertragen werden, worauf diese ihre jeweiligen Antriebseinrichtungen einschalten. Wird nun ein Fördergut auf dem Förderweg platziert, so kann es in der vorgesehenen Transportrichtung bis zum am stromabwärtigen Ende des Förderwegs angeordneten Förderabschnitt transportiert werden. Wenn die Sensoreinrichtung des endseitigen Förderabschnitts die Ankunft des Förderguts erkennt, kann die Antriebseinrichtung des endseitigen Förderabschnitts durch die entsprechende Förderabschnittssteuereinrichtung abgeschaltet werden, so dass das Fördergut in einer definierten Position angehalten wird und nicht unkontrolliert über das Ende des Förderwegs hinausgeschoben wird.

Hierauf kann die endseitige Förderabschnittssteuereinrichtung über ihre Kommunikationsschnittstelle zweiter Art und die daran angeschlossene Punkt-zu-Punkt-Leitung eine Information an die Kommunikationsschnittstelle zweiter Art der stromaufwärts benachbarten Förderabschnittssteuereinrichtung übermitteln, dass der endseitige Förderabschnitt mit Fördergut belegt ist. Die benachbarte Förderabschnittssteuereinrichtung kann dann dahingehend reagieren, dass sie, wenn ihre Sensoreinrichtung ein weiteres Fördergut erkennt, ihre Antriebseinrichtung abschaltet, so dass das weitere Fördergut in definierter Position auf dem benachbarten Förderabschnitt zum Stehen kommt.

Erfindungsgemäß ist vorgesehen, dass dem Förderweg ein zweites Kommunikationssystem zugeordnet ist, bei dem die Förderabschnittssteuereinrichtungen jeweils eine Kommunikationsschnittstelle dritter Art aufweisen, welche als Knoten eines Förderwegbusses ausgebildet sind, wobei eine mit der Fördersystemsteuereinrichtung zur Kommunikation verbundene Verbindungsschnittstelle als Knoten des Förderwegbusses ausgebildet ist.

Unter einem Bus wird allgemein eine Kommunikationsleitung verstanden, an die eine Vielzahl von Kommunikationsteilnehmern, auch Knoten genannt, insbesondere Sensoren, Aktoren und Steuergeräte, angeschlossen sind. Dabei kann durch ein sogenanntes Busprotokoll festgelegt sein, welcher Knoten welche Information zu welchem Zeitpunkt senden kann. Auf diese Weise kann insbesondere verhindert werden, dass mehrere Knoten gleichzeitig Informationen an den Bus abgeben, was die Informationsübermittlung stören könnte. Unter einem Förderwegbus wird hierbei ein solcher Bus verstanden, an den wenigstens die Kommunikationsschnittstellen dritter Art der Förderabschnittssteuerungen des Förderwegs als Knoten angeschlossen sind. Dabei ist vorgesehen, dass eine mit der Fördersystemsteuereinrichtung zur Kommunikation verbundene Verbindungsschnittstelle ebenfalls an den Förderwegbus angeschlossen ist.

Während das erste Kommunikationssystem vor allem dazu geeignet ist, Informationen in einer Richtung von der Fördersystemsteuereinrichtung zur endseitigen Förderabschnittssteuereinrichtung und von dort zur benachbarten Förderabschnittssteuereinrichtung und so weiter zu übertragen, können beim zweiten Kommunikationssystem Informationen wesentlich flexibler übertragen werden. Grundsätzlich kann so jede Förderabschnittssteuereinrichtung mit jeder anderen Förderabschnittssteuereinrichtung sowie mit der Fördersystemsteuereinrichtung jeweils bidirektional kommunizieren. Hierdurch sind komplexere Betriebsverfahren als bislang möglich. Dabei können das erste Kommunikationssystem und das zweite Kommunikationssystem so zusammenarbeiten, dass deren jeweiligen Vorteile optimal genutzt werden. Insgesamt kann so eine einfache, ausfallsichere und flexible Steuerung des Staufördersystems erreicht werden.

Gemäß der Erfindung ist eine erste Betriebsart vorgesehen, bei welcher der Förderweg ausschließlich über das erste Kommunikationssystem gesteuert ist. Auf diese Weise kann bei einem Ausfall des zweiten Kommunikationssystems der Betrieb des Staufördersystems zumindest in einem eingeschränkten Funktionsumfang aufrechterhalten werden.

Nach einer vorteilhaften Weiterbildung der Erfindung ist eine zweite Betriebsart vorgesehen, bei welcher der Förderweg ausschließlich über das zweite Kommunikationssystem gesteuert. Hierdurch kann bei einem Ausfall des ersten Kommunikationssystems der Betrieb des Staufördersystems zumindest mit einem eingeschränkten Funktionsumfang aufrecht erhalten werden.

Gemäß einer vorteilhaften Weiterbildung der Erfindung ist die Transportrichtung über das zweite Kommunikationssystem an den Förderabschnittssteuereinrichtungen einstellbar. Dies kann dadurch erfolgen, dass ein entsprechender Steuerbefehl von der Fördersystemsteuereinrichtung über den Förderwegbus an jede der Förderabschnittssteuereinrichtungen gesendet wird, welche dann Informationen, welche sie bislang mit der einen benachbarten Förderabschnittssteuereinrichtung ausgetauscht haben, nun mit der jeweils anderen benachbarten Förderabschnittssteuereinrichtung austauschen. Eine aufwändige manuelle Einstellung der Transportrichtung an jeder der Förderabschnittssteuereinrichtungen entfällt damit, wodurch eine einfache Umkehrung der Transportrichtung möglich ist.

Nach einer vorteilhaften Weiterbildung der Erfindung ist eine Übermittlung einer die Aufnahmefähigkeit für Fördergut einer besagten Förderabschnittssteuereinrichtung darstellenden Meldung an die in Bezug auf die Transportrichtung stromaufwärts benachbarte Förderabschnittssteuereinrichtung, vorzugsweise über das erste Kommunikationssystem, vorgesehen. Unter aufnahmefähig wird hierbei verstanden, dass der jeweilige Förderabschnitt nicht bereits durch ein insbesondere stehendes Fördergut belegt ist. Solange die Aufnahmefähigkeit nicht gegeben ist, kann dann weiteres Fördergut durch die stromaufwärts benachbarte Förderabschnittssteuereinrichtung zurückgehalten werden, indem die Antriebseinrichtung ihres Förderabschnitts entsprechend gesteuert wird. Hierdurch kann in einfacher Weise ein Auflaufen eines in Transportrichtung bewegten Förderguts auf ein insbesondere stehendes Fördergut vermieden werden. Bei Nutzung des ersten Kommunikationssystems kann dabei eine besonders hohe Sicherheit erreicht werden, da dieses mit seine Punkt-zu-Punkt-Leitungen im Vergleich zu einem Bussystem schneller und ausfallsicherer ist.

Gemäß einer vorteilhaften Weiterbildung der Erfindung ist eine Übermittlung einer die Abgabefähigkeit für Fördergut einer besagten Förderabschnittssteuereinrichtung darstellenden Meldung an die in Bezug auf die Transportrichtung stromabwärts benachbarte Förderabschnittssteuereinrichtung, vorzugsweise über das zweite Kommunikationssystem, vorgesehen. Unter abgabefähig wird hierbei verstanden, dass der jeweilige Förderabschnitt mit einem Fördergut belegt ist, welches mittels der Fördereinrichtung des jeweiligen Förderabschnitts stromabwärts gefördert werden könnte. Durch einen Informationsaustausch der genannten Art ist es nun möglich, die Antriebseinrichtung der stromabwärts benachbarten Fördereinrichtung nur dann einzuschalten, wenn der entsprechende Förderabschnitt selbst frei und der stromaufwärtige Förderabschnitt belegt ist. Anders herum ausgedrückt kann die Antriebseinrichtung der stromabwärts benachbarten Fördereinrichtung abgeschaltet bleiben, solange der stromaufwärts benachbarte Förderabschnitt ohnehin nicht abgabefähig ist. Im Vergleich zu heutigen Lösungen, bei denen grundsätzlich alle Förderabschnitte angetrieben sind, solange der jeweils stromabwärts benachbarte Förderabschnitt nicht belegt ist, kann so eine erhebliche Menge an Energie eingespart werden, ohne dass es zu Verzögerungen bei der Förderung von Fördergut kommt. Bei Nutzung des zweiten Kommunikationssystems kann auf eine bidirektionale Funktion des ersten Kommunikationssystems verzichtet werden, was das Staufördersystem vereinfacht.

Nach einer vorteilhaften Weiterbildung der Erfindung sind den Förderabschnittssteuereinrichtungen von der Fördersystemsteuereinrichtung, vorzugsweise über das zweite Kommunikationssystem, Softwareaktualisierungen zuführbar. Auf diese Weise kann der Wartungsaufwand des Staufördersystems signifikant verringert werden, insbesondere im Vergleich zu Lösungen, bei denen jede einzelne Förderabschnittssteuereinrichtungen manuell mittels eines tragbaren PCs oder dergleichen aktualisiert werden muss. Bei Nutzung des zweiten Kommunikationssystems können die Förderabschnittssteuereinrichtungen zeitgleich aktualisiert werden, was den Zeitbedarf einer Aktualisierung verringert.

Gemäß einer vorteilhaften Weiterbildung der Erfindung sind die Förderabschnittssteuereinrichtungen zur, insbesondere ereignisgesteuerten, Übertragung von Ereignismeldungen an die Fördersystemsteuereinrichtung, vorzugsweise über das zweite Kommunikationssystem, ausgebildet. Ereignismeldungen sind dabei solche Meldungen, welche ein Ereignis im normalen betrieblichen Ablauf beschreiben. Beispiele sind insbesondere Meldungen, welche das Schalten der Antriebseinrichtung oder das Erkennen eines Förderguts betreffen. Indem derartige Meldungen an die Fördersystemsteuereinrichtung übertragen werden, können diese zentral ausgewertet werden und zur Steuerung des Staufördersystems insgesamt herangezogen werden. Ereignisgesteuert bedeutet dabei, dass die Übermittlung einer Meldung durch den Eintritt des jeweiligen Ereignisses ausgelöst wird. Hierdurch kann eine Übermittlung der jeweiligen Ereignismeldung besonders zeitnah zum Ereignis erfolgen. Bei Nutzung des zweiten Kommunikationssystems kann auf eine bidirektionale Funktion des ersten Kommunikationssystems verzichtet werden.

Nach einer vorteilhaften Weiterbildung der Erfindung ist die Fördersystemsteuereinrichtung zur zeitgesteuerten Abfrage von Statusmeldungen von den Förderabschnittssteuereinrichtungen, vorzugsweise über das zweite Kommunikationssystem, ausgebildet. Statusmeldungen sind dabei solche Meldungen, welche den technischen Zustand des jeweiligen Förderabschnitts beschreiben. Beispiele sind insbesondere Meldungen, welche die technische Einsatzbereitschaft oder einen Wartungsbedarf betreffen. Indem derartige Meldungen von der Fördersystemsteuereinrichtung abgefragt werden, können diese zentral ausgewertet werden und zur Steuerung des Staufördersystems insgesamt und/oder zur Planung von Wartungsmaßnahmen herangezogen werden. Zeitgesteuert bedeutet dabei, dass die Abfrage einer Meldung nach einem Zeitplan ausgelöst wird. Hierdurch kann eine fortlaufende Überwachung des technischen Zustands der Förderabschnitte gewährleistet werden. Bei Nutzung des zweiten Kommunikationssystems kann auf eine bidirektionale Funktion des ersten Kommunikationssystems verzichtet werden.

Gemäß einer vorteilhaften Weiterbildung der Erfindung erfolgt die Zuweisung von Busadressen an die Kommunikationsschnittstellen dritter Art automatisch über das erste Kommunikationssystem. Üblicherweise ist es erforderlich, jedem Knoten eines Bussystems eine eindeutig identifizierbare Busadresse zuzuweisen. Herkömmlich geschieht dies manuell, indem an den Knoten angeordnete DIP-Schalter betätigt werden. Dies bedeutet insbesondere bei der ersten Inbetriebnahme eines Bussystems, aber auch nach einem nachträglichen Austausch oder Hinzufügen eines Knotens, einen hohen Bedienaufwand und stellt eine beträchtliche Fehlerquelle dar. Indem nun das Staufördersystem so ausgebildet ist, dass die Zuweisung der Busadressen an die Kommunikationsschnittstellen dritter Art automatisch über das erste Kommunikationssystem erfolgt, können diese Nachteile vermieden werden.

Nach einer vorteilhaften Weiterbildung der Erfindung umfasst die Antriebseinrichtung eine durch die Förderabschnittssteuereinrichtung steuerbare Kupplung, mit der die jeweilige Fördereinrichtung mit einem mehreren Förderabschnitten zugeordneten Motor verbindbar ist. Auf diese Weise sind die Fördereinrichtungen der Förderabschnitte mit nur einem Motor antreibbar, dennoch kann die individuelle Steuerbarkeit gewährleistet werden. Bei dem Motor kann es sich zweckmäßigerweise um einen Elektromotor handeln. Es sind aber auch andere Motorenarten möglich.

Gemäß einer vorteilhaften Weiterbildung der Erfindung umfasst die Antriebseinrichtung einen durch die Förderabschnittssteuereinrichtung steuerbaren Motor, der ausschließlich dem jeweiligen Förderabschnitt zugeordnet ist. In diesem Fall kann an den Förderabschnitten auf eine steuerbare Kupplung verzichtet werden, so dass Ausfälle durch Verschleiß der Kupplungen vermieden werden können. Auch bei diesem Motor kann es sich zweckmäßigerweise um einen Elektromotor handeln, wobei auch hier andere Motorenarten möglich sind.

Nach einer vorteilhaften Weiterbildung der Erfindung weist die Fördereinrichtung wenigstens eine durch die Antriebseinrichtung antreibbare Antriebsförderrolle und wenigstens eine mit der Antriebsförderrolle durch einen Übertrieb, beispielsweise ein Förderband oder ein Treibriemen, verbundene Laufförderrolle auf. Die Antriebsförderrolle und die wenigstens eine Laufförderrolle dienen dem Tragen und Bewegen des Förderguts. Die Antriebsförderrolle ist dabei zum Antrieb unmittelbar mit der steuerbaren Antriebseinrichtung des jeweiligen Förderabschnitts verbunden, wohingegen die Laufförderrolle zum Antrieb mit der Antriebsförderrolle verbunden ist. Der hierzu verwendete Übertrieb kann ein endloses Förderband sein, welches die Antriebsförderrolle und die Laufförderrolle umschlingt, wobei dessen Außenseite als Auflagefläche für das Fördergut dienen kann. In diesem Fall genügt in der Regel genau eine Laufförderrolle je Förderabschnitt. Alternativ kann der Übertrieb ein Treibriemen sein, der ohne Kontakt zu dem Fördergut die Antriebsförderrolle und die wenigstens eine Laufförderrolle verbindet. In diesem Fall können die Mantelflächen die Antriebsförderrolle und der wenigstens einen Laufförderrolle als Auflageflächen für das Fördergut dienen. In letzterem Fall sind mehrere Laufförderrollen je Förderabschnitt üblich.

Gemäß einer vorteilhaften Weiterbildung der Erfindung ist der Fördereinrichtung ein Sensor zur Erfassung eines Drehwinkels der Antriebsförderrolle und/oder der Laufrolle zugeordnet. Hierdurch können aus dem Drehwinkel ableitbare Informationen, beispielsweise die Fördergeschwindigkeit oder die Förderposition, eines Förderguts bestimmt werden. Wird hierbei eine Abweichung zwischen einem Istwert und einem Sollwert vor, so kann die Abweichung gegebenenfalls durch Steuereingriffe korrigiert werden. Auf diese Weise ist eine besonders genaue Steuerung der jeweiligen Fördereinrichtung möglich.

Nach einer vorteilhaften Weiterbildung der Erfindung ist der Fördereinrichtung eine durch die Förderabschnittssteuereinrichtung steuerbare Bremse zugeordnet, wobei die Förderabschnittssteuereinrichtung zur Steuerung der Bremse unter Berücksichtigung des erfassten Drehwinkels der Antriebsförderrolle und/oder der Laufrolle ausgebildet ist. Auf diese Weise ist es möglich, ein Fördergut an einer exakt definierten Stelle zum Stillstand zu bringen.

Gemäß einer vorteilhaften Weiterbildung der Erfindung ist die Förderabschnittssteuereinrichtung zur Erkennung einer Störung und/oder eines Verschleißes im Bereich des jeweiligen Förderabschnitts anhand des erfassten Drehwinkels der Antriebsförderrolle und/oder der Laufrolle ausgebildet. Beispielsweise kann eine Störung im Bereich der Antriebseinrichtung und/oder der Fördereinrichtung anhand einer größeren Abweichung des Istwertes der Geschwindigkeit von ihrem Sollwert bei zugeschalteter Antriebseinrichtung erkannt werden. Eine Störung im Bereich der Bremse kann beispielsweise daran erkannt werden, dass die Fördergeschwindigkeit bei zugeschalteter Bremse langsamer als erwartet abnimmt. Bei einer erkannten Störung kann insbesondere eine entsprechende Statusmeldung an die Fördersystemsteuereinrichtung übermittelt werden, welche dann, je nach Art der Störung beispielsweise eine Meldung an einen Bediener ausgibt oder aber den Förderweg abschaltet.

Nach einer vorteilhaften Weiterbildung der Erfindung umfasst die Sensoreinrichtung zur Erfassung von Fördergut einen optischen Sensor, beispielsweise eine Lichtschranke. Auf diese Weise kann eine sichere und berührungsfreie aber dennoch einfache Erkennung von Fördergut gewährleistet werden.

Gemäß einer vorteilhaften Weiterbildung der Erfindung ist ein Staufördersystembus vorgesehen, wobei die Fördersystemsteuereinrichtung als Knoten des Staufördersystembusses ausgebildet ist und wobei die Kommunikationsschnittstelle erster Art der am Ende des Förderwegs angeordneten Förderabschnittssteuereinrichtung und/oder die Verbindungsschnittstelle als Knoten des Staufördersystembusses ausgebildet sind. Hierdurch ist es in einfacher Weise möglich, die Kommunikationssysteme mehrerer Förderwege mit der Fördersystemsteuereinrichtung zu verbinden. Im Vergleich zu einem Staufördersystem mit individueller Verkabelung der Förderwege kann so gerade bei größeren Staufördersystemen die insgesamt erforderliche Kabellänge reduziert werden. Zudem ist an der Fördersystemsteuereinrichtung lediglich eine entsprechende Busschnittstelle erforderlich.

Nach einer vorteilhaften Weiterbildung der Erfindung ist der Staufördersystembus ein Master-Slave-Bus, insbesondere ein Profibus, an den die Fördersystemsteuereinrichtung als Master sowie die Kommunikationsschnittstelle erster Art und/oder die Verbindungsschnittstelle als Slave angeschlossen sind. Bei einem Master-Slave-Bus ist der jeweilige Master-Knoten für die Gesamtsteuerung des Bussystems verantwortlich. Dies betrifft insbesondere die Initialisierung des Bussystems beim Einschalten desselben sowie die Steuerung des Datenaustauschs auf dem Bussystem. Dabei kann insbesondere vorgesehen sein, dass die Steuerung des Datenaustauschs derart erfolgt, dass der Master-Knoten zyklisch Daten von den Slave-Knoten abfragt. Auf diese Weise sind insbesondere zeitgesteuerte Statusabfragen der Fördersystemsteuereinrichtung an die Förderabschnittssteuereinrichtungen einfach realisierbar. Geeignet ist insbesondere ein Profibus (Process Field Bus), der sich insbesondere in seiner Version Profibus DP (Process Field Bus Decentralized Peripherials) zur Anbindung der Förderabschnittssteuereinrichtungen an die Fördersystemsteuereinrichtung als vorteilhaft erwiesen hat, auch wenn er ursprünglich zur Anbindung von Sensoren und Aktoren an eine zentrale Steuereinrichtung gedacht war.

Gemäß einer vorteilhaften Weiterbildung der Erfindung ist der Förderwegbus ein Multi-Master-Bus, insbesondere ein Canbus. Bei einem Multi-Master-Bus sind prinzipiell alle Knoten gleichberechtigt. Die Steuerung des Datenaustauschs, insbesondere die Zuweisung von Zugriffsrechten, kann durch die sogenannte Bit-Arbitrierung erfolgen, bei der jeder Nachricht eine Priorität zugewiesen ist. Senden hierbei zwei Knoten gleichzeitig, so wird die Nachricht mit der geringeren Priorität abgebrochen und die mit der höheren Priorität übermittelt. Hierdurch können wichtige Mitteilungen bevorzugt und ohne an ein vorgegebenes Zeitmuster gebunden zu sein praktisch in Echtzeit übermittelt werden, was insbesondere bei der Kommunikation der Förderabschnittssteuereinrichtungen untereinander von Vorteil ist, wenn beispielsweise eilige Belegtmeldungen übertragen werden sollen, um einen Zusammenstoss von Fördergütern zu vermeiden. Geeignet ist insbesondere ein Canbus (Controller Area Network Bus), der sich auch zur Anbindung der Förderabschnittssteuereinrichtungen an die Fördersystemsteuereinrichtung als vorteilhaft erwiesen hat, auch wenn er ursprünglich zur Anwendung in Kraftfahrzeugen gedacht war.

Weiterhin betrifft die vorliegende Erfindung eine Förderabschnittssteuereinrichtung für einen Förderabschnitt eines Staufördersystems zum staudrucklosen Fördern von Fördergut längs wenigstens eines Förderwegs aus mehreren Förderabschnitten, wobei die Förderabschnitte jeweils eine Fördereinrichtung zum Fördern von Fördergut in einer Transportrichtung, eine steuerbare Antriebseinrichtung zum Antrieb der Fördereinrichtung und eine Sensoreinrichtung zur Erfassung von Fördergut auf dem jeweiligen Förderabschnitt umfassen, wobei die Förderabschnittssteuereinrichtung zum Steuern der Antriebseinrichtung und zum Verarbeiten von Signalen der Sensoreinrichtung ausgebildet ist, wobei die Förderabschnittssteuereinrichtung jeweils über eine Kommunikationsschnittstelle zweiter Art und eine daran angeschlossene Punkt-zu-Punkt-Leitung mit den benachbarten Förderabschnittssteuereinrichtungen zur Kommunikation verbindbar ist, wobei eine erste Betriebsart vorgesehen ist, bei welcher die Kommunikation mit den benachbarten Förderabschnittssteuerungen ausschließlich über die Kommunikationsschnittstelle zweiter Art vorgesehen ist.

Die eingangs gestellte Aufgabe wird bei einer gattungsgemäßen Förderabschnittssteuereinrichtung dadurch gelöst, dass die Förderabschnittssteuereinrichtung eine Kommunikationsschnittstelle dritter Art zur Kommunikation mit der Fördersystemsteuereinrichtung aufweist, welche als Knoten für einen Förderwegbus ausgebildet ist.

Die erfindungsgemäße Förderabschnittssteuereinrichtung kann wie vorstehend erläutert weitergebildet werden. Es ergeben sich die oben erläuterten Vorteile.

Die Erfindung und ihre vorteilhaften Aus- und Weiterbildungen sowie deren Vorteile werden nachfolgend anhand einer Figur näher erläutert. Es zeigt in einer schematischen Prinzipskizze:

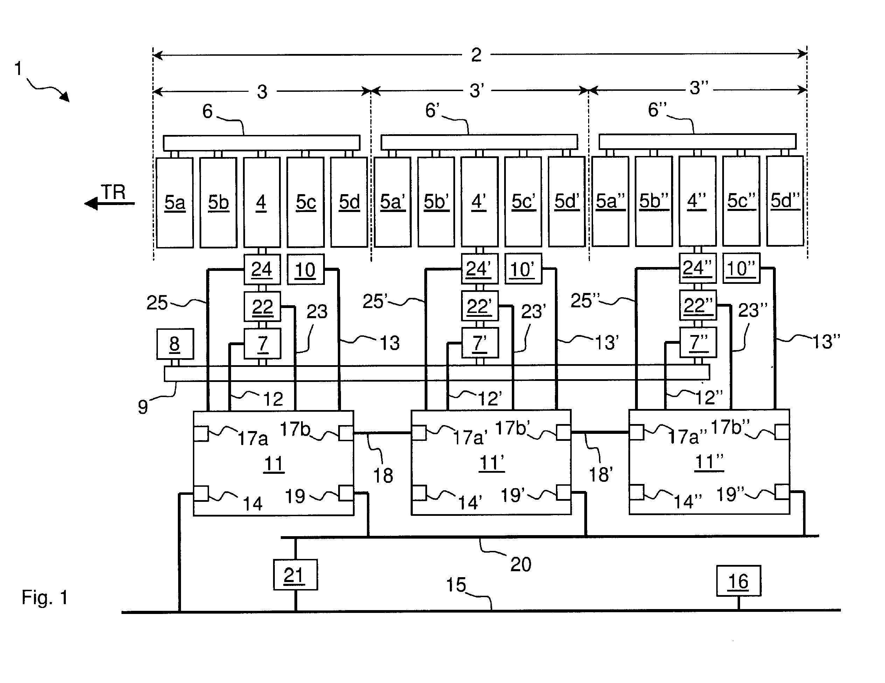

- **Figur 1**: eine schematisierte Aufsicht auf ein Ausführungsbeispiel eines erfindungsgemäßen Staufördersystems.

Figur 1 zeigt ein Ausführungsbeispiel eines erfindungsgemäßen Staufördersystems 1, welches einen Förderweg 2 aufweist, der aus einer Vielzahl von Förderabschnitten 3, 3', 3" besteht, welche derart steuerbar sind, dass beim Fördern von Fördergut in einer Transportrichtung TR ein Auflaufen eines der Fördergüter auf ein anderes Fördergut verhindert ist. Das Staufördersystem 1 kann aber auch mehrere Förderwege umfassen, welche beispielsweise durch Übergabeeinrichtungen wie Einmündungen oder Abzweigungen miteinander verbunden sein können. Der Förderweg 2 weist zur Darstellung der Funktionsweise des Staufördersystems 1 einen am stromabwärtigen Ende des Fördersystems angeordneten Förderabschnitt 3, einen an einem stromaufwärtigen Ende angeordneten Förderabschnitt 3" sowie einen dazwischen angeordneten Förderabschnitt 3' auf. In der Praxis kann jedoch der Förderweg 2 deutlich mehr Förderabschnitte 3, 3', 3", beispielsweise zwischen 5 und 20 Förderabschnitte 3, 3', 3", aufweisen.

Die Förderabschnitte 3, 3', 3" sind im Wesentlichen gleichartig aufgebaut. Diese Aufbau wird zunächst am Beispiel des Förderabschnitts 3 erläutert.

Der Förderabschnitt 3 weist eine Fördereinrichtung 4, 5a, 5b, 5c, 5d auf, welche zum Tragen und Bewegen von Fördergut ausgebildet ist. Die Fördereinrichtung 4, 5a, 5b, 5c, 5d weist eine antreibbare Antriebsförderrolle 4 und mit der Antriebsförderrolle 4 durch einen Übertrieb 6 verbundene Laufförderrollen 4, 5a, 5b, 5c, 5d auf. Die Antriebsförderrolle 4 und die wenigstens eine Laufförderrolle 5a, 5b, 5c, 5d dienen dem Tragen und Bewegen des Förderguts.

Die Antriebsförderrolle 4 ist dabei zum Antrieb unmittelbar mit einer steuerbaren Antriebseinrichtung 7 des Förderabschnitts 3 verbunden, wohingegen die Laufförderrollen 5a, 5b, 5c, 5d zum Antrieb mit der Antriebsförderrolle 4 verbunden sind. Der hierzu verwendete Übertrieb 6 ist im Ausführungsbeispiel ein Treibriemen 6, der ohne Kontakt zu dem Fördergut die Antriebsförderrolle 4 und die Laufförderrollen 5a, 5b, 5c, 5d verbindet. In diesem Fall können die Mantelflächen die Antriebsförderrolle 4 und der Laufförderrollen 5a, 5b, 5c, 5d als Auflageflächen für das Fördergut dienen. Der Übertrieb könnte aber auch ein endloses Förderband sein, welches die Antriebsförderrolle 4 und die Laufförderrollen 5a, 5b, 5c, 5d umschlingt, wobei dessen Außenseite als Auflagefläche für das Fördergut dienen könnte. In diesem Fall würde in der Regel genau eine Laufförderrolle 5a, 5b, 5c, 5d ausreichen.

Die Antriebseinrichtung 7 zum Antrieb der Fördereinrichtung 4, 5a, 5b, 5c, 5d ist steuerbar. Auf diese Weise ist es möglich, eines der Fördergüter wahlweise auf dem Förderabschnitt 3 anzuhalten oder in der vorgesehenen Transportrichtung TR zu fördern.

Die Antriebseinrichtung 7 umfasst eine steuerbare Kupplung 7, mit der die Fördereinrichtung 4, 5a, 5b, 5c, 5d mit einem mehreren Förderabschnitten 3, 3', 3" zugeordneten Motor 8 verbindbar ist. Bei dem Motor 8 kann es sich um einen Elektromotor 8 handeln. Es sind aber auch andere Motorenarten möglich. Dabei ist eine Antriebsseite der Kupplung 7 durch einen Antriebsriemen 9 mit dem Motor 8 verbunden. Dieser Antriebsriemen 9 ist auch mit der steuerbaren Kupplung 7' des Förderabschnitts 3' und mit der steuerbaren Kupplung 7 des Förderabschnitts 3" verbunden. Auf diese Weise sind die Fördereinrichtungen 4, 5a, 5b, 5c, 5d; 4', 5a', 5b', 5c', 5d'; 4", 5a", 5b", 5c", 5d" der Förderabschnitte 3, 3', 3" mit nur einem Motor 8 antreibbar, dennoch kann die individuelle Steuerbarkeit gewährleistet werden.

Alternativ könnten die Antriebseinrichtung 7, 7', 7" jeweils einen steuerbaren Motor aufweisen, der ausschließlich dem jeweiligen Förderabschnitt 3, 3', 3" zugeordnet ist. In diesem Fall könnte an den Förderabschnitten 3, 3', 3" auf eine steuerbare Kupplung 7, 7', 7" verzichtet werden, so dass Ausfälle durch Verschleiß der Kupplungen 7, 7', 7" vermieden werden könnten.

Weiterhin umfasst der Förderabschnitt 3 eine Sensoreinrichtung 10 zur Erfassung von Fördergut auf dem Förderabschnitt 3. Hierdurch kann festgestellt werden, ob der Förderabschnitt 3 mit einem Fördergut belegt oder ob er unbelegt ist. Vorteilhafterweise umfasst die Sensoreinrichtung 10 zur Erfassung von Fördergut einen optischen Sensor 10, beispielsweise eine Lichtschranke 10. Auf diese Weise kann eine sichere und berührungsfreie aber dennoch einfache Erkennung von Fördergut gewährleistet werden.

Darüber hinaus weist der Förderabschnitt3 eine Förderabschnittssteuereinrichtung 11 auf, welche zum Steuern der Antriebseinrichtung 7 des Förderabschnitts 3 und zum Verarbeiten von Signalen der Sensoreinrichtung 10 des Förderabschnitts 3 ausgebildet ist. Hierzu ist im Ausführungsbeispiel die Förderabschnittssteuereinrichtung 11 mit der Antriebseinrichtung 7 über eine Steuerleitung 12 und mit der Sensoreinrichtung 10 über eine Signalleitung 13 verbunden zum Informationsaustausch verbunden.

Dabei ist dem Förderweg 2 ein erstes Kommunikationssystem zugeordnet, bei dem die am stromabwärtigen Ende des Förderwegs 2 angeordnete Förderabschnittssteuereinrichtung 11 eine Kommunikationsschnittstelle 14 erster Art aufweist, welche über einen Staufördersystembus 15 mit einer Fördersystemsteuereinrichtung 16 zur Steuerung des Förderwegs 2 zur Kommunikation verbunden ist. Bei der mittleren Förderabschnittssteuereinrichtungen 11' des Förderwegs 2 ist eine Kommunikationsschnittstelle 14' erster

Art nicht erforderlich, aber möglich. Bei der am anderen Ende des Förderwegs 2 angeordneten Förderabschnittssteuereinrichtung 11 " ist eine Kommunikationsschnittstelle 14" erster Art ebenfalls nicht zwingend erforderlich, aber insbesondere dann sinnvoll, wenn die Transportrichtung des Förderwegs 2 umkehrbar sein soll. Im Ausführungsbeispiel sind die Kommunikationsschnittstelle 14' und 14" erster Art zwar vorhanden aber unbeschaltet.

Bei der Fördersystemsteuereinrichtung 16 kann es sich insbesondere um eine programmierbare Steuerung 16 zur Steuerung des Staufördersystem 1 insgesamt handeln. Sie kann eine nicht gezeigte Bedienschnittstelle aufweisen, so dass das Staufördersystem 1 insgesamt zentral durch eine Bedienperson bedienbar ist. Die Fördersystemsteuereinrichtung 16 kann insbesondere dazu dienen, die Förderabläufe verschiedener Förderwege 2 des Fördersystems 1 aufeinander abzustimmen.

Weiterhin ist bei dem ersten Kommunikationssystem die Förderabschnittssteuereinrichtung 11 über eine Kommunikationsschnittstelle 17b zweiter Art und eine daran angeschlossene Punkt-zu-Punkt-Leitung 18 mit der Kommunikationsschnittstelle 17a' zweiter Art der benachbarten Förderabschnittssteuereinrichtung 11' zur Kommunikation verbunden. Ebenso ist die Förderabschnittssteuereinrichtung 11' über eine Kommunikationsschnittstelle 17b' zweiter Art und eine daran angeschlossene Punkt-zu-Punkt-Leitung 18' mit der Kommunikationsschnittstelle 17a" zweiter Art der benachbarten Förderabschnittssteuereinrichtung 11 " zur Kommunikation verbunden.

Das bedeutet, dass die mittlere Förderabschnittssteuereinrichtung 11' über zwei Kommunikationsschnittstellen 17a' und 17b' zweiter Art mit ihren beiden benachbarten Förderabschnittssteuereinrichtungen 11 und 11 " verbunden ist. Hingegen weist die stromabwärtige endseitige Förderabschnittssteuereinrichtung 11 nur eine benachbarte Förderabschnittssteuereinrichtung 11' auf, so dass die zweite Kommunikationsschnittstelle 17a zweiter Art unbeschaltet bleiben kann oder weggelassen werden könnte. Ebenso weist die stromaufwärtige endseitige Förderabschnittssteuereinrichtung 11 " nur eine benachbarte Förderabschnittssteuereinrichtung 11' auf, so dass auch die zweite Kommunikationsschnittstelle 17b" zweiter Art unbeschaltet bleiben kann oder weggelassen werden könnte.

Das erste Kommunikationssystem erlaubt eine einfache, schnelle und sichere Abstimmung der Arbeitsabläufe innerhalb des Förderwegs 2 sowie eine Abstimmung der Arbeitsabläufe im Förderweg 2 an externe Arbeitsabläufe.

Hierzu kann ein sogenanntes Daisy-Chain-Verfahren vorgesehen sein, bei dem Steuerbefehle in genau einer Richtung, nämlich entgegen der Transportrichtung TR, von der Fördersystemsteuereinrichtung 16 zur stromabwärtigen Förderabschnittssteuereinrichtung 11, von dort bis zur stromaufwärts benachbarten Förderabschnittssteuereinrichtung 11' und von dort weiter zur nächsten stromaufwärts benachbarten Förderabschnittssteuereinrichtung 11" übertragen werden.

Beispielsweise kann ein durch die Fördersystemsteuereinrichtung 16 an die Kommunikationsschnittselle erster Art 14a der endseitigen Förderabschnittssteuereinrichtung 11 gegebener Einschaltbefehl über die Kommunikationsschnittstellen zweiter Art 17b und 17a' und die dazwischen angeschlossene Punkt-zu-Punkt-Leitung 18 zur mittleren Förderabschnittssteuereinrichtung 11' und von dort über die Kommunikationsschnittstellen zweiter Art 17b' und 17a' 'und die dazwischen angeschlossene Punkt-zu-Punkt-Leitung 18' zur stromaufwärtigen Förderabschnittssteuereinrichtung 11" übertragen werden, worauf diese ihre jeweiligen Antriebseinrichtungen 7, 7', 7" einschalten. Wird nun ein Fördergut auf dem Förderweg 2 platziert, so kann es in der vorgesehenen Transportrichtung TR bis zum am stromabwärtigen Ende des Förderwegs 2 angeordneten Förderabschnitt 3 transportiert werden. Wenn die Sensoreinrichtung 10 des endseitigen Förderabschnitts 3 die Ankunft des Förderguts erkennt, kann die Antriebseinrichtung 10 des endseitigen Förderabschnitts 3 durch die entsprechende Förderabschnittssteuereinrichtung 11 abgeschaltet werden, so dass das Fördergut in einer definierten Position angehalten wird und nicht unkontrolliert über das Ende des Förderwegs 2 hinausgeschoben wird.

Hierauf kann die endseitige Förderabschnittssteuereinrichtung 3 über ihre Kommunikationsschnittstelle zweiter Art 17b und die daran angeschlossene Punkt-zu-Punkt-Leitung 18 eine Information an die Kommunikationsschnittstelle zweiter Art 17a' der stromaufwärts benachbarten Förderabschnittssteuereinrichtung 11 übermitteln, dass der endseitige Förderabschnitt 3 mit Fördergut belegt ist. Die benachbarte Förderabschnittssteuereinrichtung 11' kann dann dahingehend reagieren, dass sie, wenn ihre Sensoreinrichtung 10' ein weiteres Fördergut erkennt, ihre Antriebseinrichtung 7' abschaltet, so dass das weitere Fördergut in definierter Position auf dem benachbarten Förderabschnitt 3' zum Stehen kommt.

Weiterhin ist vorgesehen, dass dem Förderweg 2 ein zweites Kommunikationssystem zugeordnet ist, bei dem die Förderabschnittssteuereinrichtungen 11, 11', 11" jeweils eine Kommunikationsschnittstelle dritter Art 19, 19', 19"aufweisen, welche als Knoten 19, 19', 19" eines Förderwegbusses 20 ausgebildet sind, wobei eine mit der Fördersystemsteuereinrichtung 16 zur Kommunikation verbundene Verbindungsschnittstelle 21 als Knoten des Förderwegbusses 20 ausgebildet ist.

Während das erste Kommunikationssystem vor allem dazu geeignet ist, Informationen in einer Richtung von der Fördersystemsteuereinrichtung 16 zur endseitigen Förderabschnittssteuereinrichtung 11 und von dort zur benachbarten Förderabschnittssteuereinrichtung 11' und so weiter zu übertragen, können beim zweiten Kommunikationssystem Informationen wesentlich flexibler übertragen werden. Grundsätzlich kann so jede Förderabschnittssteuereinrichtung 11, 11', 11" mit jeder anderen Förderabschnittssteuereinrichtung 11, 11', 11" sowie mit der Fördersystemsteuereinrichtung 16 jeweils bidirektional kommunizieren. Hierdurch sind komplexere Betriebsverfahren als bislang möglich. Dabei können das erste Kommunikationssystem und das zweite Kommunikationssystem so zusammenarbeiten, dass deren jeweiligen Vorteile optimal genutzt werden. Insgesamt kann so eine einfache, ausfallsichere und flexible Steuerung des Staufördersystems 1 erreicht werden.

Im Ausführungsbeispiel ist der Fördereinrichtung 4, 5a, 5b, 5c, 5d des Förderabschnitts 3 ein Sensor 22 zur Erfassung eines Drehwinkels der Antriebsförderrolle 4 zugeordnet, der mit der Förderabschnittssteuereinrichtung 11 über eine Signalleitung 23 zur Kommunikation verbunden ist. Hierdurch können aus dem Drehwinkel ableitbare Informationen, beispielsweise die Fördergeschwindigkeit oder die Förderposition, eines Förderguts bestimmt werden. Wird hierbei eine Abweichung zwischen einem Istwert und einem Sollwert vor, so kann die Abweichung gegebenenfalls durch Steuereingriffe korrigiert werden. Auf diese Weise ist eine besonders genaue Steuerung der Fördereinrichtung 4, 5a, 5b, 5c, 5d möglich.

Zweckmäßigerweise ist der Fördereinrichtung 4, 5a, 5b, 5c, 5d des Förderabschnitts 3 eine durch die Förderabschnittssteuereinrichtung 11 steuerbare Bremse 24 zugeordnet, wozu beide mittels einer Steuerleitung 25 verbunden sind. Vorteilhafterweise ist die Förderabschnittssteuereinrichtung 11 zur Steuerung der Bremse 24 unter Berücksichtigung des erfassten Drehwinkels der Antriebsförderrolle 4 ausgebildet. Auf diese Weise ist es möglich, ein Fördergut an einer exakt definierten Stelle zum Stillstand zu bringen.

Die Förderabschnittssteuereinrichtung 11 kann zur Erkennung einer Störung und/oder eines Verschleißes im Bereich des Förderabschnitts 3 anhand des erfassten Drehwinkels der Antriebsförderrolle 4 ausgebildet sein. Beispielsweise kann eine Störung im Bereich der Antriebseinrichtung 7 und/oder der Fördereinrichtung 4, 5a, 5b, 5c, 5d anhand einer größeren Abweichung des Istwertes der Geschwindigkeit von ihrem Sollwert bei zugeschalteter Antriebseinrichtung 7 erkannt werden. Eine Störung im Bereich der Bremse 24 kann beispielsweise daran erkannt werden, dass die Fördergeschwindigkeit bei zugeschalteter Bremse 24 langsamer als erwartet abnimmt. Bei einer erkannten Störung kann insbesondere eine entsprechende Statusmeldung an die Fördersystemsteuereinrichtung 16 übermittelt werden, welche dann, je nach Art der Störung beispielsweise eine Meldung an einen Bediener ausgibt oder aber den Förderweg 2 abschaltet.

Vorteilhafterweise ist eine erste Betriebsart vorgesehen, bei welcher der Förderweg 2 ausschließlich über das erste Kommunikationssystem gesteuert ist. Auf diese Weise kann bei einem Ausfall des zweiten Kommunikationssystems der Betrieb des Staufördersystems 1 zumindest in einem eingeschränkten Funktionsumfang aufrecht erhalten werden.

Ebenso vorteilhaft ist eine zweite Betriebsart vorgesehen, bei welcher der Förderweg 2 ausschließlich über das zweite Kommunikationssystem gesteuert. Hierdurch kann bei einem Ausfall des ersten Kommunikationssystems der Betrieb des Staufördersystems 1 zumindest mit einem eingeschränkten Funktionsumfang aufrecht erhalten werden.

Die Transportrichtung TR ist im Ausführungsbeispiels über das zweite Kommunikationssystem an den Förderabschnittssteuereinrichtungen 11, 11', 11" einstellbar. Dies kann dadurch erfolgen, dass ein entsprechender Steuerbefehl von der Fördersystemsteuereinrichtung 16 über den Förderwegbus 20 an jede der Förderabschnittssteuereinrichtungen 11, 11', 11" gesendet wird, welche dann Informationen, welche sie bislang in die eine Richtung ausgetauscht haben, nun in die andere Richtung austauschen. Eine aufwändige manuelle Einstellung der Transportrichtung TR an jeder der Förderabschnittssteuereinrichtungen 11, 11', 11" entfällt damit.

Dabei ist eine Übermittlung einer die Aufnahmefähigkeit für Fördergut einer der Förderabschnittssteuereinrichtungen 11, 11', 11" darstellenden Meldung an die in Bezug auf die Transportrichtung stromaufwärts benachbarte Förderabschnittssteuereinrichtung 11, 11', 11 ", vorzugsweise über das erste Kommunikationssystem, vorgesehen. Unter aufnahmefähig wird hierbei verstanden, dass der jeweilige Förderabschnitt 3, 3', 3" nicht bereits durch ein insbesondere stehendes Fördergut belegt ist. Solange die Aufnahmefähigkeit nicht gegeben ist, kann dann weiteres Fördergut durch die stromaufwärts benachbarte Förderabschnittssteuereinrichtung 11, 11', 11" zurückgehalten werden, indem die Antriebseinrichtung 7, 7', 7" ihres Förderabschnitts 3, 3', 3" entsprechend gesteuert wird. Hierdurch kann in einfacher Weise ein Auflaufen eines in Transportrichtung TR bewegten Förderguts auf ein insbesondere stehendes Fördergut vermieden werden. Bei Nutzung des ersten Kommunikationssystems kann dabei eine besonders hohe Sicherheit erreicht werden, da dieses mit seine Punkt-zu-Punkt-Leitungen im Vergleich zu einem Bussystem schneller und ausfallsicherer ist.

Ebenso ist eine Übermittlung einer die Abgabefähigkeit für Fördergut einer der Förderabschnittssteuereinrichtungen 11, 11', 11" darstellenden Meldung an die in Bezug auf die Transportrichtung stromabwärts benachbarte Förderabschnittssteuereinrichtung 11, 11', 11 ", vorzugsweise über das zweite Kommunikationssystem, vorgesehen. Unter abgabefähig wird hierbei verstanden, dass der jeweilige Förderabschnitt 3, 3', 3" mit einem Fördergut belegt ist, welches mittels der Fördereinrichtung 4, 5a, 5b, 5c, 5d; 4', 5a', 5b', 5c', 5d'; 4", 5a", 5b", 5c", 5d" des jeweiligen Förderabschnitts 3, 3', 3" stromabwärts gefördert werden könnte. Durch einen Informationsaustausch der genannten Art ist es nun möglich, die Antriebseinrichtung 7, 7', 7" der stromabwärts benachbarten Fördereinrichtung 4, 5a, 5b, 5c, 5d; 4', 5a', 5b', 5c', 5d'; 4", 5a", 5b", 5c", 5d" nur dann einzuschalten, wenn der entsprechende Förderabschnitt 3, 3', 3" selbst frei und der stromaufwärtige Förderabschnitt 3, 3', 3" belegt ist. Anders herum ausgedrückt kann die Antriebseinrichtung 7, 7', 7" der stromabwärts benachbarten Fördereinrichtung 4, 5a, 5b, 5c, 5d; 4', 5a', 5b', 5c', 5d'; 4", 5a", 5b", 5c", 5d" abgeschaltet bleiben, solange der stromaufwärts benachbarte Förderabschnitt 3, 3', 3" ohnehin nicht abgabefähig ist. Im Vergleich zu heutigen Lösungen, bei denen grundsätzlich alle Förderabschnitte 3, 3', 3" angetrieben sind, solange der jeweils stromabwärts benachbarte Förderabschnitt 3, 3', 3" nicht belegt ist, kann so eine erhebliche Menge an Energie eingespart werden, ohne dass es zu Verzögerungen bei der Förderung von Fördergut kommt. Bei Nutzung des zweiten Kommunikationssystems kann auf eine bidirektionale Funktion des ersten Kommunikationssystems verzichtet werden, was das Staufördersystem 1 vereinfacht.

Vorzugsweise sind den Förderabschnittssteuereinrichtungen 11, 11', 11" von der Fördersystemsteuereinrichtung 16, vorzugsweise über das zweite Kommunikationssystem, Softwareaktualisierungen zuführbar. Auf diese Weise kann der Wartungsaufwand des Staufördersystems signifikant verringert werden, insbesondere im Vergleich zu Lösungen, bei denen jede einzelne Förderabschnittssteuereinrichtungen manuell mittels eines tragbaren PCs oder dergleichen aktualisiert werden muss. Bei Nutzung des zweiten Kommunikationssystems können die Förderabschnittssteuereinrichtungen 11, 11', 11 " zeitgleich aktualisiert werden, was den Zeitbedarf einer Aktualisierung verringert.

Bevorzugt sind die Förderabschnittssteuereinrichtungen 11, 11', 11" zur, insbesondere ereignisgesteuerten, Übertragung von Ereignismeldungen an die Fördersystemsteuereinrichtung 16, vorzugsweise über das zweite Kommunikationssystem, ausgebildet. Indem derartige Meldungen an die Fördersystemsteuereinrichtung übertragen werden, können diese zentral ausgewertet werden und zur Steuerung des Staufördersystems 1 insgesamt herangezogen werden. Bei Nutzung des zweiten Kommunikationssystems kann auf eine bidirektionale Funktion des ersten Kommunikationssystems verzichtet werden.

Zweckmäßigerweise ist die Fördersystemsteuereinrichtung 16 zur zeitgesteuerten Abfrage von Statusmeldungen von den Förderabschnittssteuereinrichtungen 11, 11', 11". Indem derartige Meldungen von der Fördersystemsteuereinrichtung abgefragt werden, können diese zentral ausgewertet werden und zur Steuerung des Staufördersystems 1 insgesamt und/oder zur Planung von Wartungsmaßnahmen herangezogen werden. Bei Nutzung des zweiten Kommunikationssystems kann auf eine bidirektionale Funktion des ersten Kommunikationssystems verzichtet werden.

Vorteilhafterweise erfolgt die Zuweisung von Busadressen an die Kommunikationsschnittstellen dritter Art 19, 19', 19" automatisch über das erste Kommunikationssystem. Indem das Staufördersystem 1 derart ausgebildet ist, können Fehler bei einer manuellen Adresszuweisung sowie ein überhöhter manueller Einstellaufwand vermieden werden.

Indem die Fördersystemsteuereinrichtung 16 als Knoten 16 des Staufördersystembusses 15 ausgebildet ist und indem die Kommunikationsschnittstelle erster Art 14 der am Ende des Förderwegs 2 angeordneten Förderabschnittssteuereinrichtung 11 und die Verbindungsschnittstelle 21 als Knoten 11, 21 des Staufördersystembusses 15 ausgebildet sind, ist es in einfacher Weise möglich, die Kommunikationssysteme mehrerer Förderwege 2 mit der Fördersystemsteuereinrichtung 16 zu verbinden. Im Vergleich zu einem Staufördersystem1 mit individueller Verkabelung der Förderwege 2 kann so gerade bei größeren Staufördersystemen 1 die insgesamt erforderliche Kabellänge reduziert werden. Zudem ist an der Fördersystemsteuereinrichtung 16 lediglich eine entsprechende Busschnittstelle erforderlich.

Vorteilhafterweise ist der Staufördersystembus 15 ein Master-Slave-Bus 15, insbesondere ein Profibus 15, an den die Fördersystemsteuereinrichtung 16 als Master 16 sowie die Kommunikationsschnittstelle erster Art 14 der am Ende des Förderwegs 2 angeordneten Förderabschnittssteuereinrichtung 11 und die Verbindungsschnittstelle 21 als Slave 21 angeschlossen sind.

Ebenso zweckmäßig ist der Förderwegbus 20 ein Multi-Master-Bus 20, insbesondere ein Canbus 20.

### Bezugszeichenliste

- 1: Staufördersystem
- 2: Förderweg
- 3: Förderabschnitt
- 4: Antriebsförderrolle
- 5: Laufförderrolle
- 6: Übertrieb, Treibriemen
- 7: Steuerbare Antriebseinrichtung, steuerbare Kupplung
- 8: Motor
- 9: Antriebsriemen
- 10: Sensoreinrichtung für Fördergut
- 11: Förderabschnittssteuereinrichtung
- 12: Steuerleitung für Kupplung
- 13: Signalleitung für Sensoreinrichtung für Fördergut
- 14: Kommunikationsschnittstelle erster Art
- 15: Staufördersystembus
- 16: Fördersystemsteuereinrichtung
- 17: Kommunikationsschnittstelle zweiter Art
- 18: Punkt-zu-Punkt-Leitung
- 19: Kommunikationsschnittstelle dritter Art
- 20: Förderwegbus
- 21: Verbindungsschnittstelle
- 22: Sensor für Drehwinkel
- 23: Signalleitung für Sensor für Drehwinkel
- 24: Bremse
- 25: Steuerleitung für Bremse
- TR: Transportrichtung

## Patentansprüche

1. Staufördersystem, insbesondere Staurollenfördersystem (1), zum staudrucklosen Fördern von Fördergut längs wenigstens eines Förderwegs (2) aus mehreren Förderabschnitten (3, 3', 3"), wobei die Förderabschnitte (3, 3', 3") jeweils eine Fördereinrichtung (4, 5, 6; 4', 5', 6'; 4", 5", 6") zum Fördern von Fördergut in einer Transportrichtung (TR), eine steuerbare Antriebseinrichtung (7, 7', 7") zum Antrieb der Fördereinrichtung (4, 5, 6; 4', 5', 6'; 4", 5", 6"), eine Sensoreinrichtung (10, 10', 10") zur Erfassung von Fördergut auf dem jeweiligen Förderabschnitt (3, 3', 3") und eine Förderabschnittssteuereinrichtung (11, 11', 11") zum Steuern der Antriebseinrichtung (7, 7', 7") und zum Verarbeiten von Signalen der Sensoreinrichtung (10, 10', 10") umfassen, wobei dem Förderweg (2) ein erstes Kommunikationssystem (14, 17b, 17a', 17b', 17a", 18, 18') zugeordnet ist, bei dem eine besagte an einem Ende des Förderwegs (2) angeordnete Förderabschnittssteuereinrichtung (11) eine Kommunikationsschnittstelle erster Art (14) aufweist, welche mit einer Fördersystemsteuereinrichtung (16) zur Steuerung des wenigstens einen Förderwegs (2) zur Kommunikation verbunden ist, und bei dem die Förderabschnittssteuereinrichtungen (11, 11', 11 ") jeweils über eine Kommunikationsschnittstelle zweiter Art (17b, 17a', 17b', 17a") und eine daran angeschlossene Punkt-zu-Punkt-Leitung (18, 18') mit den jeweils benachbarten Förderabschnittssteuereinrichtungen (11, 11', 11") zur Kommunikation verbunden sind, wobei eine erste Betriebsart vorgesehen ist, bei welcher der Förderweg (2) ausschließlich über das erste Kommunikationssystem (14, 17b, 17a', 17b', 17a", 18, 18') gesteuert ist, **dadurch gekennzeichnet, dass** dem Förderweg (2) ein zweites Kommunikationssystem (19, 19', 19", 20, 21) zugeordnet ist, bei dem die Förderabschnittssteuereinrichtungen (11, 11', 11") jeweils eine Kommunikationsschnittstelle dritter Art aufweisen (19, 19', 19"), welche als Knoten eines Förderwegbusses (20) ausgebildet sind, wobei eine mit der Fördersystemsteuereinrichtung (16) zur Kommunikation verbundene Verbindungsschnittstelle (21) als Knoten des Förderwegbusses (20) ausgebildet ist.

2. Staufördersystem nach vorstehendem Anspruch, **dadurch gekennzeichnet, dass** eine zweite Betriebsart vorgesehen ist, bei welcher der Förderweg (2) ausschließlich über das zweite Kommunikationssystem (19, 19', 19", 20, 21) gesteuert ist.

3. Staufördersystem nach einem der vorstehenden Ansprüche, **dadurch gekennzeichnet, dass** die Transportrichtung (TR) über das zweite Kommunikationssystem (19, 19', 19", 20, 21) an den Förderabschnittssteuereinrichtungen (11, 11', 11") einstellbar ist.

4. Staufördersystem nach einem der vorstehenden Ansprüche, **dadurch gekennzeichnet, dass** eine Übermittlung einer die Aufnahmefähigkeit für Fördergut einer besagten Förderabschnittssteuereinrichtung (11, 11', 11 ") darstellenden Meldung an die in Bezug auf die Transportrichtung (TR) stromaufwärts benachbarte Förderabschnittssteuereinrichtung (11, 11', 11 "), vorzugsweise über das erste Kommunikationssystem (14, 17b, 17a', 17b', 17a", 18, 18'), vorgesehen ist.

5. Staufördersystem nach einem der vorstehenden Ansprüche, **dadurch gekennzeichnet, dass** eine Übermittlung einer die Abgabefähigkeit für Fördergut einer besagten Förderabschnittssteuereinrichtung (11, 11', 11") darstellenden Meldung an die in Bezug auf die Transportrichtung (TR) stromabwärts benachbarte Förderabschnittssteuereinrichtung (11, 11', 11"), vorzugsweise über das zweite Kommunikationssystem (19, 19', 19", 20, 21), vorgesehen ist.

6. Staufördersystem nach einem der vorstehenden Ansprüche, **dadurch gekennzeichnet, dass** den Förderabschnittssteuereinrichtungen (11, 11', 11 ") von der Fördersystemsteuereinrichtung (16), vorzugsweise über das zweite Kommunikationssystem (19, 19', 19", 20, 21), Softwareaktualisierungen zuführbar sind.

7. Staufördersystem nach einem der vorstehenden Ansprüche, **dadurch gekennzeichnet, dass** die Förderabschnittssteuereinrichtungen (11, 11', 11 ") zur, insbesondere ereignisgesteuerten, Übertragung von Ereignismeldungen an die Fördersystemsteuereinrichtung (16), vorzugsweise über das zweite Kommunikationssystem (19, 19', 19", 20, 21), ausgebildet sind.

8. Staufördersystem nach einem der vorstehenden Ansprüche, **dadurch gekennzeichnet, dass** die Fördersystemsteuereinrichtung (16) zur zeitgesteuerten Abfrage von Statusmeldungen von den Förderabschnittssteuereinrichtungen (11, 11', 11 "), vorzugsweise über das zweite Kommunikationssystem (19, 19', 19", 20, 21), ausgebildet ist.

9. Staufördersystem nach einem der vorstehenden Ansprüche, **dadurch gekennzeichnet, dass** die Zuweisung von Busadressen an die Kommunikationsschnittstellen dritter Art (19, 19', 19") automatisch über das erste Kommunikationssystem (14, 17b, 17a', 17b', 17a", 18, 18') erfolgt.

10. Staufördersystem nach einem der vorstehenden Ansprüche, **dadurch gekennzeichnet, dass** die Antriebseinrichtung (7, 7', 7') eine durch die Förderabschnittssteuereinrichtung (11, 11', 11") steuerbare Kupplung (7, 7', 7') umfasst, mit der die jeweilige Fördereinrichtung (4, 5, 6; 4', 5', 6'; 4", 5", 6") mit einem mehreren Förderabschnitten (3, 3', 3") zugeordneten Motor (8) verbindbar ist.

11. Staufördersystem nach einem der Ansprüche 1 bis 9, **dadurch gekennzeichnet, dass** die Antriebseinrichtung (7, 7', 7') einen durch die Förderabschnittssteuereinrichtung (11, 11', 11") steuerbaren Motor umfasst, der ausschließlich dem jeweiligen Förderabschnitt (3, 3', 3") zugeordnet ist.

12. Staufördersystem nach einem der vorstehenden Ansprüche, **dadurch gekennzeichnet, dass** die Fördereinrichtung (4, 5, 6; 4', 5', 6'; 4", 5", 6") wenigstens eine durch die Antriebseinrichtung antreibbare Antriebsförderrolle (4, 4', 4") und wenigstens eine mit der Antriebsförderrolle (4, 4', 4") durch einen Übertrieb (6, 6', 6"), beispielsweise ein Förderband oder ein Treibriemen (6, 6', 6"), verbundene Laufförderrolle (5, 5', 5") aufweist.

13. Staufördersystem nach Anspruch 12, **dadurch gekennzeichnet, dass** der Fördereinrichtung (4, 5, 6; 4', 5', 6'; 4", 5", 6") ein Sensor (22, 22', 22") zur Erfassung eines Drehwinkels der Antriebsförderrolle (4, 4', 4") und/oder der Laufförderrolle (5, 5', 5") zugeordnet ist.

14. Staufördersystem nach Anspruch 13, **dadurch gekennzeichnet, dass** der Fördereinrichtung (4, 5, 6; 4', 5', 6'; 4", 5", 6") eine durch die Förderabschnittssteuereinrichtung (11, 11', 11") steuerbare Bremse (24, 24', 24") zugeordnet ist, wobei die Förderabschnittssteuereinrichtung (11, 11', 11") zur Steuerung der Bremse (24, 24', 24") unter Berücksichtigung des erfassten Drehwinkels der Antriebsförderrolle (4, 4', 4") und/oder der Laufrolle (5, 5', 5") ausgebildet ist.

15. Staufördersystem nach Anspruch 13 oder 14, **dadurch gekennzeichnet, dass** die Förderabschnittssteuereinrichtung (11, 11', 11") zur Erkennung einer Störung und/oder eines Verschleißes im Bereich des jeweiligen Förderabschnitts (3, 3', 3") anhand des erfassten Drehwinkels der Antriebsförderrolle (4, 4', 4") und/oder der Laufrolle (5, 5', 5") ausgebildet ist.

16. Staufördersystem nach einem der vorstehenden Ansprüche, **dadurch gekennzeichnet, dass** die Sensoreinrichtung (10, 10', 10") zur Erfassung von Fördergut einen optischen Sensor (10, 10', 10"), beispielsweise eine Lichtschranke (10, 10', 10"), ümfasst.

17. Staufördersystem nach einem der vorstehenden Ansprüche, **dadurch gekennzeichnet, dass** ein Staufördersystembus (15, 15', 15") vorgesehen ist, wobei die Fördersystemsteuereinrichtung (16) als Knoten des Staufördersystembusses (15, 15', 15") ausgebildet ist und wobei die Kommunikationsschnittstelle (14) erster Art und/oder die Verbindungsschnittstelle (21) als Knoten des Staufördersystembusses (15, 15', 15") ausgebildet sind.

18. Staufördersystem nach Anspruch 17, **dadurch gekennzeichnet, dass** der Staufördersystembus (15, 15', 15") ein Master-Slave-Bus (15, 15', 15"), insbesondere ein Profibus (15, 15', 15"), ist, an den die Fördersystemsteuereinrichtung (16) als Master sowie die Kommunikationsschnittstelle erster Art (14) der am Ende des Förderwegs angeordneten Förderabschnittssteuereinrichtung (11) und/oder die Verbindungsschnittstelle (21) als Slave angeschlossen sind.

19. Staufördersystem nach einem der vorstehenden Ansprüche, **dadurch gekennzeichnet, dass** der Förderwegbus (20) ein Multi-Master-Bus (20), insbesondere ein Canbus (20), ist.

20. Förderabschnittssteuereinrichtung für einen Förderabschnitt (3, 3', 3") eines Staufördersystems (1) zum staudrucklosen Fördern von Fördergut längs wenigstens eines Förderwegs (2) aus mehreren Förderabschnitten (3, 3', 3"), wobei die Förderabschnitte (3, 3', 3") jeweils eine Fördereinrichtung (4, 5, 6; 4', 5', 6'; 4", 5", 6") zum Fördern von Fördergut in einer Transportrichtung (TR), eine steuerbare Antriebseinrichtung (7, 7', 7') zum Antrieb der Fördereinrichtung (4, 5, 6; 4', 5', 6'; 4", 5", 6") und eine Sensoreinrichtung (10, 10', 10") zur Erfassung von Fördergut auf dem jeweiligen Förderabschnitt (3, 3', 3") umfassen, wobei die Förderabschnittssteuereinrichtung (11, 11', 11 ") zum Steuern der Antriebseinrichtung (7, 7', 7') und zum Verarbeiten von Signalen der Sensoreinrichtung (10, 10', 10") ausgebildet ist, wobei die Förderabschnittssteuereinrichtung (11, 11', 11") jeweils über eine Kommunikationsschnittstelle zweiter Art (17, 17', 17") und eine daran angeschlossene Punkt-zu-Punkt-Leitung (18,18') mit den benachbarten Förderabschnittssteuereinrichtungen (11, 11', 11") zur Kommunikation verbindbar ist, wobei eine erste Betriebsart vorgesehen ist, bei welcher die Kommunikation mit den benachbarten Förderabschnittssteuereinrichtungen (11, 11', 11") ausschließlich über die Kommunikationsschnittstelle zweiter Art (17, 17', 17") vorgesehen ist, **dadurch gekennzeichnet, dass** die Förderabschnittssteuereinrichtung (11, 11', 11 ") eine Kommunikationsschnittstelle dritter Art (19, 19', 19") zur Kommunikation mit der Fördersystemsteuereinrichtung aufweist, welche als Knoten für einen Förderwegbus ausgebildet ist.

## Claims

1. An accumulating conveyor system, particularly an accumulating roller conveyor system (1), for conveying transported material with no back pressure along at least one conveyor route (2) comprising a plurality of conveyor segments (3, 3', 3"), the conveyor segments (3, 3', 3") each comprising a conveyor device (4, 5, 6; 4', 5', 6'; 4", 5", 6") for conveying transported material in a transport direction (TR), a controllable drive device (7, 7', 7") for driving the conveying device (4, 5, 6; 4', 5', 6'; 4", 5", 6"), a sensor device (10, 10', 10") for detecting transported material on each of the conveyor segments (3, 3', 3") and a conveyor segment controller (11, 11', 11") for controlling the drive device (7, 7', 7") and for processing signals from the sensor device (10, 10', 10"), a first communication system (14, 17b, 17a', 17b', 17a", 18, 18') being associated with the conveyor route (2), one of said conveyor segment controllers (11) being disposed at one end of the conveyor route (2) and comprising a communication interface of a first type (14) connected to a conveyor system controller (16) for controlling the at least one conveyor route (2) for communicating, and the conveyor segment controllers (11, 11', 11") being connected to the adjacent conveyor segment controller (11, 11', 11 ") for communicating by means of a communication interface of a second type (17b, 17a', 17b', 17a") and a point-to-point line (18, 18') connected thereto, a first operating mode being provided in which the conveyor route (2) is controlled exclusively by means of the first communication system (14, 17b, 17a', 17b', 17a", 18, 18'), **characterized in that** a second communication system (19, 19', 19", 20, 21) is associated with the conveyor route (2), wherein the conveyor segment controllers (11, 11', 11") each comprise a communication interface of a third type (19, 19', 19") implemented as nodes of a conveyor route bus (20), wherein a connecting interface (21) connected to the conveyor system controller (16) for communication is implemented as a node of the conveyor route bus.

2. The accumulating conveyor system according to the preceding claim, **characterized in that** a second operating mode is provided, wherein the conveyor route (2) is controlled exclusively by means of the second communication system (19, 19', 19", 20, 21).

3. The accumulating conveyor system according to any one of the preceding claims, **characterized in that** the transport direction (TR) can be adjusted by means of the second communication system (19, 19', 19", 20, 21) at the conveyor segment controllers (11, 11', 11").

4. The accumulating conveyor system according to any one of the preceding claims, **characterized in that** a transmission of a message representing the receiving capacity for transported material of one of said conveyor segment controllers (11, 11', 11 ") to the adjacent conveyor segment controller (11, 11', 11 ") in the upstream direction with respect to the transport direction (TR) is provided, preferably by means of the first communication system (14, 17b, 17a', 17b', 17a", 18, 18').

5. The accumulating conveyor system according to any one of the preceding claims, **characterized in that** a transmission of a message representing the delivery capacity for transported material of one of said conveyor segment controllers (11, 11', 11 ") to the adjacent conveyor segment controller (11, 11', 11") in the downstream direction with respect to the transport direction (TR) is provided, preferably by means of the second communication system (19, 19', 19", 20, 21).

6. The accumulating conveyor system according to any one of the preceding claims, **characterized in that** software updates can be sent to the conveyor segment controllers (11, 11', 11 ") from the conveyor system controller (16), preferably by means of the second communication system (19, 19', 19", 20, 21).

7. The accumulating conveyor system according to any one of the preceding claims, **characterized in that** the conveyor segment controllers (11, 11', 11 ") are implemented for transferring event messages, particularly triggered by events, to the conveyor system controller (16), preferably by means of the second communication system (19, 19', 19", 20, 21).

8. The accumulating conveyor system according to any one of the preceding claims, **characterized in that** the conveyor system controller (16), is implemented for time-controlled interrogation of status messages from the conveyor segment controllers (11, 11', 11 "), preferably via the second communication system (19, 19', 19", 20, 21).

9. The accumulating conveyor system according to any one of the preceding claims, **characterized in that** the assignment of bus addresses to the communications interfaces of the third type (19, 19', 19") is done automatically by means of the first communication system (14, 17b, 17a', 17b', 17a", 18, 18').

10. The accumulating conveyor system according to any one of the preceding claims, **characterized in that** the drive device (7, 7', 7") comprises a clutch (7, 7', 7") controlled by the conveyor segment controller (11, 11', 11"), by means of which the corresponding conveyor device (4, 5, 6; 4', 5', 6'; 4", 5", 6") can be connected to a motor (8) associated with a plurality of conveyor segments (3, 3', 3").

11. The accumulating conveyor system according to any one of the claims 1 through 9, **characterized in that** the drive device (7, 7', 7") comprises a motor controlled by the conveyor segment controller (11, 11', 11 ") and associated exclusively with the corresponding conveyor segment (3, 3' 3").

12. The accumulating conveyor system according to any one of the preceding claims, **characterized in that** the conveyor device (4, 5, 6; 4', 5', 6'; 4", 5", 6") comprises at least one drive conveyor roller (4, 4', 4") driven by the drive device and at least one running conveyor roller (5, 5', 5") connected to the drive conveyor roller (4, 4', 4") by a transfer drive (6, 6', 6") such as a conveyor belt or a drive belt (6, 6', 6").

13. The accumulating conveyor system according to claim 12, **characterized in that** the conveyor device (4, 5, 6; 4', 5', 6'; 4", 5", 6") is associated with a sensor (22, 22', 22") for capturing an angle of rotation of the drive conveyor roller (4, 4', 4") and/or the running conveyor roller (5, 5' 5").

14. The accumulating conveyor system according to claim 13, **characterized in that** the conveyor device (4, 5, 6; 4', 5', 6'; 4", 5", 6") is associated with a brake (24, 24', 24") that can be actuated by the conveyor segment controller (11, 11', 11 "), wherein the conveyor segment controller (11, 11', 11 ") is implemented for controlling the brake (24, 24', 24") on the basis of the captured angle of rotation of the drive conveyor roller (4, 4', 4") and/or the running roller (5, 5', 5").

15. The accumulating conveyor system according to claim 13 or 14, **characterized in that** the conveyor segment controller (11, 11', 11 ") is implemented for detecting a fault and/or wear in the region of each conveyor segment (3, 3', 3") using the captured angle of rotation of the drive conveyor roller (4, 4', 4") and/or the running roller (5, 5', 5").

16. The accumulating conveyor system according to any one of the preceding claims, **characterized in that** the sensor device (10, 10', 10") comprises an optical sensor (10, 10', 10"), such as a photoelectric sensor (10, 10', 10"), for detecting transported material.

17. The accumulating conveyor system according to any one of the preceding claims, **characterized in that** an accumulating conveyor system bus (15, 15', 15") is provided, wherein the conveyor system controller (16) is implemented as a node of the accumulating conveyor system bus (15, 15', 15") and wherein the communication interface (14) of the first type and/or the connecting interface (21) are implemented as nodes of the accumulating conveyor system bus (15, 15', 15").

18. The accumulating conveyor system according to claim 17, **characterized in that** the accumulating conveyor system bus (15, 15', 15") is a master-slave bus (15, 15', 15"), particularly a Profibus (15, 15', 15"), to which the conveyor system controller (16) is connected as a master and the communication interface of the first type (14) of the conveyor segment controller (11) disposed at the end of the conveyor route and/or the connecting interface (21) are connected as slaves.

19. The accumulating conveyor system according to any one of the preceding claims, **characterized in that** the conveyor route bus (20) is a multi-master bus (20), particularly a Canbus (20).

20. A conveyor segment controller for a conveyor segment (3, 3', 3") of an accumulating conveyor system (1) for conveying transported material with no back pressure along at least one conveyor route (2) comprising a plurality of conveyor segments (3, 3', 3"), the conveyor segments (3, 3', 3") each comprising a conveyor device (4, 5, 6; 4', 5', 6'; 4", 5", 6") for conveying transported material in a transport direction (TR), a controllable drive device (7, 7', 7") for driving the conveying device (4, 5, 6; 4', 5', 6'; 4", 5", 6") and a sensor device (10, 10', 10") for detecting transported material on each of the conveyor segments (3, 3', 3"), the conveyor segment controller (11, 11', 11") being implemented for controlling the drive device (7, 7', 7") and for processing signals from the sensor device (10, 10', 10"), the conveyor segment controller (11, 11', 11") being able to be connected for communicating to the adjacent conveyor segment controllers (11, 11', 11 ") by means of a corresponding communication interface of a second type (17, 17', 17") and a point-to-point line (18, 18') connected to it, a first operating mode being provided in which the communication with the adjacent conveyor segment controllers (11, 11', 11 ") is provided exclusively by means of the communication interface of the second type (17, 17', 17"), **characterized in that** the conveyor segment controller (11, 11', 11 ") comprises a communication interface of a third type (19, 19', 19") for communicating with the conveyor system controller implemented as a node for a conveyor route bus.

## Revendications

1. Système de convoyage à accumulation, en particulier système de convoyage à accumulation à rouleaux (1), pour le convoyage sans pression dynamique d'une matière à transporter le long au moins d'un itinéraire de convoyage (2) composé de plusieurs tronçons de convoyage (3, 3', 3"), sachant que les tronçons de convoyage (3, 3', 3") comportent respectivement un dispositif de convoyage (4, 5, 6 ; 4', 5', 6' ; 4", 5", 6") pour le convoyage d'une matière à convoyer dans un sens de transport (TR), un dispositif d'entraînement commandable (7, 7', 7") pour entraîner le dispositif de convoyage (4, 5, 6 ; 4', 5', 6' ; 4", 5", 6"), un dispositif de capteur (10, 10', 10") pour détecter la matière à transporter sur le tronçon de convoyage respectif (3, 3', 3") et un dispositif de commande de tronçon de convoyage (11, 11', 11 ") pour commander le dispositif d'entraînement (7, 7', 7") et pour traiter des signaux du dispositif de capteur (10, 10', 10"), sachant qu'il est attribué à l'itinéraire de convoyage (2) un premier système de communication (14, 17b, 17a', 17b', 17a", 18, 18'), dans lequel un dit dispositif de commande de tronçon de convoyage (11) disposé à une extrémité de l'itinéraire de convoyage (2) comporte une interface de communication d'un premier type (14), qui est reliée pour la communication à un dispositif de commande du système de convoyage (16) pour la commande de l'au moins un itinéraire de convoyage (2), et dans lequel les dispositifs de commande des tronçons de convoyage (11, 11', 11") sont respectivement reliés pour la communication aux dispositifs de commande de tronçons de convoyage (11, 11', 11 ") respectivement voisins via une interface de communication d'un second type (17b, 17a', 17b', 17a") et une ligne point-à-point (18, 18') raccordée à ladite interface de communication d'un second type (17b, 17a', 17b', 17a"), sachant qu'il est prévu un premier mode de fonctionnement, dans lequel l'itinéraire de convoyage (2) est commandé exclusivement via le premier système de communication (14, 17b, 17a', 17b', 17a", 18, 18'), **caractérisé en ce qu'**il est attribué à l'itinéraire de convoyage (2) un second système de communication (19, 19', 19", 20, 21) dans lequel les dispositifs de commande des tronçons de convoyage (11, 11', 11") comportent respectivement une interface de communication d'un troisième type (19, 19', 1 "), qui se présente sous la forme d'un noeud de bus d'itinéraire de convoyage (20), sachant qu'une interface de connexion (21) reliée pour la communication au dispositif de commande du système de convoyage (16) se présente sous la forme d'un noeud du bus d'itinéraire de convoyage (20).

2. Système de convoyage à accumulation selon la revendication précédente, **caractérisé en ce qu'**il est prévu un deuxième mode de fonctionnement, dans lequel l'itinéraire de convoyage (2) est commandé exclusivement via le deuxième système de communication (19, 19', 19", 20, 21).

3. Système de convoyage à accumulation selon l'une des revendications précédentes, **caractérisé en ce que** le sens de transport (TR) peut être réglé aux dispositifs de commande de tronçons de convoyage (11, 11', 11 ") via le deuxième système de communication (19, 19', 19", 20, 21).

4. Système de convoyage à accumulation selon l'une des revendications précédentes, **caractérisé en ce qu'**il est prévu une transmission d'un message représentant la capacité d'accueil de matière à transporter de l'un desdits dispositifs de commande de tronçons de convoyage (11, 11', 11 ") au dispositif de commande de tronçon de convoyage (11, 11', 11") voisin disposé en amont par rapport au sens de convoyage (TR), de préférence via le premier système de communication (14, 17b, 17a', 17b', 17a", 18, 18').

5. Système de convoyage à accumulation selon l'une des revendications précédentes, **caractérisé en ce qu'**il est prévu une transmission d'un message représentant la capacité de délivrance de matière à transporter de l'un desdits dispositifs de commande de tronçons de convoyage (11, 11', 11") au dispositif de commande de tronçon de convoyage (11, 11', 11") voisin disposé en aval par rapport au sens de convoyage (TR), de préférence via le deuxième système de communication (19, 19', 19", 20, 21).

6. Système de convoyage à accumulation selon l'une des revendications précédentes, **caractérisé en ce que** des mises à jour de logiciel peuvent être communiquées aux dispositifs de commande des tronçons de convoyage (11, 11', 11") par le dispositif de commande du système de convoyage (16), de préférence via le deuxième système de communication (19, 19', 19", 20, 21).

7. Système de convoyage à accumulation selon l'une des revendications précédentes, **caractérisé en ce que** les dispositifs de commande des tronçons de convoyage (11, 11', 11") se présentent sous une forme appropriée pour la transmission, en particulier pilotée par évènement, de messages d'évènement au dispositif de commande du système de convoyage (16), de préférence via le deuxième système de communication (19, 19', 19", 20, 21).

8. Système de convoyage à accumulation selon l'une des revendications précédentes, **caractérisé en ce que** le dispositif de commande du système de convoyage (16) se présente sous une forme appropriée pour l'interrogation asservie au temps de messages d'état depuis les dispositifs de commande des tronçons de convoyage (11, 11', 11 "), de préférence via le deuxième de communication (19, 19', 19", 20, 21).

9. Système de convoyage à accumulation selon l'une des revendications précédentes, **caractérisé en ce que** l'attribution des adresses de bus aux interfaces de communication de troisième type (19, 19', 19") s'effectue automatiquement via le premier système de communication (14, 17b, 17a', 17b', 17a", 18, 18').

10. Système de convoyage à accumulation selon l'une des revendications précédentes, **caractérisé en ce que** le dispositif d'entraînement (7, 7', 7") comporte un couplage (7, 7', 7") commandable par le dispositif de commande de tronçon de convoyage (11, 11', 11 "), via lequel le dispositif de convoyage respectif (4, 5, 6 ; 4', 5', 6' ; 4", 5", 6") peut être relié à un moteur (8) attribué à plusieurs tronçons de convoyage (3, 3', 3").

11. Système de convoyage à accumulation selon l'une des revendications 1 à 9, **caractérisé en ce que** le dispositif d'entraînement (7, 7', 7") comporte un moteur commandable par le dispositif de commande de tronçon de convoyage (11, 11', 11 "), qui est attribué exclusivement au tronçon de convoyage respectif (3, 3', 3").

12. Système de convoyage à accumulation selon l'une des revendications précédentes, **caractérisé en ce que** le dispositif de convoyage (4, 5, 6 ; 4', 5', 6' ; 4", 5", 6") comporte au moins un rouleau d'entraînement de convoyage (4, 4', 4") pouvant être entraîné par le dispositif d'entraînement et au moins un rouleau de convoyage entraîné (5, 5', 5") relié au rouleau d'entraînement de convoyage (4, 4', 4") par une transmission (6, 6', 6"), par exemple un tapis de convoyage ou une courroie de transmission (6, 6', 6").

13. Système de convoyage à accumulation selon la revendication 12, **caractérisé en ce qu'**un capteur (22, 22', 22") est attribué au dispositif de convoyage (4, 5, 6 ; 4', 5', 6' ; 4", 5", 6") pour détecter un angle de rotation du rouleau d'entraînement de convoyage (4, 4', 4") et/ou du rouleau de convoyage entraîné (5, 5', 5").

14. Système de convoyage à accumulation selon la revendication 13, **caractérisé en ce qu'**il est attribué au dispositif de convoyage (4, 5, 6 ; 4', 5', 6' ; 4", 5", 6") un frein (24, 24', 24") commandable par le dispositif de commande de tronçon de convoyage (11, 11', 11 "), sachant que le dispositif de commande de tronçon de convoyage (11, 11', 11 ") se présente sous une forme pour commander le frein (24, 24', 24") compte tenu de l'angle de rotation détecté du rouleau d'entraînement de convoyage (4, 4', 4") et/ou du rouleau de convoyage entraîné (5, 5', 5").

15. Système de convoyage à accumulation selon la revendication 13 ou 14, **caractérisé en ce que** le dispositif de commande de tronçon de convoyage (11, 11', 11") se présente sous une forme pour détecter un dysfonctionnement et/ou une usure dans la zone du tronçon de convoyage respectif (3, 3', 3") à l'aide de l'angle de rotation détecté du rouleau d'entraînement de convoyage (4, 4', 4") et/ou du rouleau de convoyage entraîné (5, 5', 5").

16. Système de convoyage à accumulation selon l'une des revendications précédentes, **caractérisé en ce que** pour la détection de la matière à transporter, le dispositif de capteur (10, 10', 10") comporte un capteur optique (10, 10', 10"), par exemple une barrière lumineuse (10, 10', 10").

17. Système de convoyage à accumulation selon l'une des revendications précédentes, **caractérisé en ce qu'**il est prévu un bus de système de convoyage à accumulation (15, 15', 15"), sachant que le dispositif de commande de système de convoyage (16) se présente sous la forme d'un noeud du bus de système de convoyage à accumulation (15, 15', 15") et sachant que l'interface de communication (14) de premier type et/ou l'interface de connexion (21) se présentent sous la forme de noeuds du bus du système de convoyage à accumulation (15, 15', 15").

18. Système de convoyage à accumulation selon la revendication 17, **caractérisé en ce que** le bus de système de convoyage à accumulation (15, 15', 15") est un bus maître-esclave (15, 15', 15"), en particulier un profibus (15, 15', 15"), auquel sont raccordés le dispositif de commande de système de convoyage (16) comme maître ainsi que l'interface de communication de premier type (14) du dispositif de commande de tronçon de convoyage (11) disposé à l'extrémité de l'itinéraire de convoyage et/ou l'interface de connexion (21), comme esclave.

19. Système de convoyage à accumulation selon l'une des revendications précédentes, **caractérisé en ce que** le bus d'itinéraire de convoyage (20) est un bus multimaître (20), en particulier un bus CAN (20).

20. Dispositif de commande de tronçon de convoyage pour un tronçon de convoyage (3, 3', 3") d'un système de convoyage à accumulation (1) pour le convoyage sans pression dynamique d'une matière à transporter le long au moins d'un itinéraire de convoyage (2) composé de plusieurs tronçons de convoyage (3, 3', 3"), sachant que les tronçons de convoyage (3, 3', 3") comportent respectivement un dispositif de convoyage (4, 5, 6 ; 4', 5', 6' ; 4", 5", 6") pour le convoyage d'une matière à convoyer dans un sens de transport (TR), un dispositif d'entraînement commandable (7, 7', 7") pour entraîner le dispositif de convoyage (4, 5, 6 ; 4', 5', 6' ; 4", 5", 6") et un dispositif de capteur (10, 10', 10") pour détecter la matière à transporter sur le tronçons de convoyage respectif (3, 3', 3"), sachant que le dispositif de commande de tronçon de convoyage (11, 11', 11 ") se présente sous une forme pour commander le dispositif d'entraînement (7, 7', 7") et pour traiter des signaux du dispositif de capteur (10, 10', 10"), sachant que pour la communication, le dispositif de commande de tronçon de convoyage (11, 11', 11 ") peut être relié respectivement avec les dispositifs de commande de tronçons de convoyage voisins (11, 11', 11") via une interface de communication de deuxième type (17, 17', 17") et une ligne point-à-point (18, 18') raccordée à ladite interface de communication de deuxième type (17, 17', 17"), sachant qu'il est prévu un premier mode de fonctionnement, dans lequel la communication avec les dispositifs de commande de tronçons de convoyage voisins (11, 11', 11 ") est prévue exclusivement via l'interface de communication de deuxième type (17, 17', 17"), **caractérisé en ce que** le dispositif de commande de tronçon de convoyage (11, 11', 11") comporte une interface de communication de troisième type (19, 19', 19") pour la communication avec le dispositif de commande de système de convoyage, qui se présente sous la forme d'un noeud pour un bus d'itinéraire de convoyage.
